# EUROPÄISCHE PATENTSCHRIFT

(11) **EP 1 022 164 B1**
(45) Veröffentlichungstag und Bekanntmachung des Hinweises auf die Patenterteilung: **29.10.2003**
(21) Anmeldenummer: 00810057.0
(22) Anmeldetag: 24.01.2000
(51) Int. Cl.: B60D 1/06, B60D 1/14

(54) **Anhängevorrichtung und Kupplungshaken**
Towing device and hitch
Dispositif d'attelage et crochet

(30) Priorität: 25.01.1999 CH 13899
(43) Veröffentlichungstag der Anmeldung: 26.07.2000
(73) Patentinhaber: SCAMBIA INDUSTRIAL DEVELOPMENTS AKTIENGESELLSCHAFT, 9494 Schaan (LI)
(72) Erfinder: Jaggi, Diego, 8049 Zürich (CH); Kägi, Peter, 8632 Tann (CH)
(74) Vertreter: Eder, Carl E.

(56) Entgegenhaltungen:
- EP-A- 0 108 870
- EP-A- 0 133 340
- EP-A- 0 561 151
- CA-A- 1 236 138
- FR-A- 2 258 987
- US-A- 5 112 074

## Beschreibung

Die Erfindung betrifft eine Anhängevorrichtung gemäss dem Oberbegriff des Patentanspruchs 1 und einen Kupplungshaken gemäss dem Oberbegriff des Anspruchs 16.

Bisherige Anhängevorrichtungen, meist aus Stahl, sind in einer grossen Typenvielfalt herstellbar, welche als Zusatzausrüstung, angepasst auf die unterschiedlichen räumlichen Randbedingungen eines sehr breiten Sortiments von Fahrzeugen, einsetzbar sind. Diese bekannten Anhängevorrichtungen weisen jedoch ein relativ hohes Gewicht auf und sind überdies korrosionsanfällig. Auch einzelne neue Ausführungen aus Aluminium weisen immer noch ein relativ hohes Gewicht auf. Anderseits ist aus der EP 0 108 870 A ein kombinierter Stossfänger mit Anhängerkupplung aus faserverstärktem Werkstoff in Form von kastenförmigen Winkelkörpern bekannt. Diese Veröffentlichung offenbart jedoch keine separate Anhängevorrichtung, die sich an beliebige Fahrzeuge mit ihren integrierten serienmässigen Stossfängern nachträglich als zusätzliche Komponente einbauen lässt. Überdies kann in diesem Fall die Kraft nicht von der Kupplungskugel direkt auf das Fahrzeug-Chassis übertragen werden.

Die EP 0 561 151 A offenbart ein Verfahren zum Herstellen von Trägern aus faserverstärkten Kunststoffen für Stossfänger.

Die CA 1 236 138 A offenbart einen Kupplungshaken mit einer Kugel. Diese Kugel und ein kurzer, an diese anschliessender Hals bestehen aus einem Metallkern und einem diesen umgebenden Körper aus glasfaserverstärktem Kunststoff.

Es ist Aufgabe der vorliegenden Erfindung, die vorgenannten Nachteile zu überwinden, und eine Anhängevorrichtung sowie einen Kupplungshaken zu schaffen, welche universell für serienmässige Fahrzeuge mit integrierten Stossfängern einsetzbar sowie in verschiedenen Formen ausführbar sind und vor allem viel leichter sind als die vorbenannten Ausführungsformen. Anhängevorrichtung und Kupplungshaken sollen zudem serienmässig relativ einfach und kostengünstig herstellbar sein.

Diese Aufgabe wird gelöst durch die Anhängevorrichtung gemäss Anspruch 1 und den Kupplungshaken nach Anspruch 16.

Der Kraftübertragungsteil weist gemäss der Erfindung mindestens zwei miteinander verbundene Teilschalen auf. Diese können zusammen einen Hohlkörper begrenzen, der beispielsweise mehr oder weniger länglich sowie rohrförmig und - für sich allein - beispielsweise an beiden Enden offen ist. Bei einer vorteilhaften Ausgestaltung weist der Kraftübertragungsteil zwei und nur zwei Teilschalen auf. Im Folgenden wird die eine, untere dieser zwei Teilschalen auch als Halbschale und die andere, obere der zwei Teilschalen auch als Deckelelement bezeichnet.

Der Kupplungshaken kann fest sowie unlösbar oder abnehmbar mit dem Kraftübertragungsteil verbunden sein und bei der Verwendung der Anhängevorrichtung starr sowie unbeweglich vom Kraftübertragungsteil gehalten werden. Der Aufbau eines Kraftübertragungsteils mit mindestens zwei Teilschalen und mit der bevorzugten Ausrichtung der Fasern bezüglich der Kraftübertragungsrichtung ergibt einen dünnwandigen, grossvolumigen Hohlkörper mit hohen Festigkeits- und Steifigkeitseigenschaften zur Übertragung aller verschiedener auftretender Kräfte, welche auf die Kupplungskugel eines Kupplungshakens einwirken.

Damit wird insgesamt eine sehr grosse Gewichtsreduktion erreicht. Überdies ist diese Bauweise relativ einfach und sowohl in verschiedenen Formen als auch serienmässig kostengünstig herstellbar.

Die abhängigen Patentansprüche betreffen Weiterbildungen und Ausführungsvarianten der Anhängevorrichtung und dessen Kupplungshakens mit zusätzlichen Vorteilen bezüglich räumlicher Anordnung, minimalem Gewicht, einfacher Herstellung und vor allem auch mit der Möglichkeit, ein breites Sortiment von Anhängevorrichtungen durch ein Modularsystem mit wenigen Elementen abdecken zu können.

Es sei hier noch eine Anmerkung zu den in diesem Text verwendeten Begriffen "Endlosfasern", Langfasern" und "Kurzfasern" eingefügt. Unter Endlosfasern werden wie in der Fasertechnologie üblich Fasern verstanden, die bei ihrer Herstellung sehr lang sowie eben praktisch endlos sind und sich bei ihrer Anordnung in Teilschalen des Kraftübergangselements zum Beispiel unterbruchslos von einem Ende und/oder Rand zu einem gegenüberstehenden Ende bzw. Rand einer Teilschale erstrecken oder sogar mehrmals zwischen Enden und/oder Rändern hin und her verlaufen. Unter Lang- und Kurzfasern werden Fasern oder Faserstücke verstanden, die beispielsweise ungefähr 1 cm bis einige Zentimeter bzw. ungefähr 1 mm bis einige Millimeter lang sind. Die Längen der Lang- und Kurzfasern sind dann normalerweise kleiner und sogar wesentlich kleiner als die charakteristischen Abmessungen der sie enthaltenden, faserverstärkten Teile und Elemente. Endlosfasern ergeben eine grössere Verstärkung als Langfasern oder gar Kurzfasern, sind aber üblicherweise teurer.

Im folgenden wird die Erfindung anhand von Beispielen und Figuren weiter erläutert. In der Zeichnung zeigt
Fig. 1 schematisch eine erfindungsgemässe Anhängevorrichtung mit einem Querrohr,
Fig. 2 eine erfindungsgemässe Anhängevorrichtung mit einem Längsrohr,
Fig. 3a, b Beispiele von Querrohren,
Fig. 4a, b Beispiele von Querschnitten von Querrohren,
Fig. 5 eine Anhängevorrichtung mit Querrohr in Modulbauweise,
Fig. 6a, b, c ein Kraftaufnahmeelement A in verschiedenen Ansichten,
Fig. 7a, b, c Beispiele von Querrohren im Querschnitt,
Fig. 8a, b ein Kraftumlenkelement U in zwei Ansichten,
Fig. 9a, b ein zugeordnetes Krafteinleitungselement E in zwei Ansichten,
Fig. 10 eine Anhängevorrichtung mit ablängbarem Querrohr,
Fig. 11a, b eine Anhängevorrichtung mit einem Längsrohr zur Aufnahme eines Reserverads,
Fig. 12a, b eine Anhängevorrichtung mit einem flachen kastenförmigen Langsrohr,
Fig. 12c, d weitere Beispiele eines Längsrohrs im Querschnitt,
Fig. 13 einen erfindungsgemässen Kupplungshaken,
Fig. 14 eine Faserorientierung der Endlosfaserverstarkung,
Fig. 15 einen Hakenschaft mit Schichtaufbau,
Fig. 16a, b einen Hakenschaft mit innerem Kern und Mantelschicht,
Fig. 17, 18 Hakenschäfte mit Innenrohr,
Fig. 19 einen Hakenschaft mit einem inneren Stützkörper,
Fig. 20, 21 Hakenschäfte, welche aus zwei Halbschalen bestehen,
Fig. 22a, b einen Hakenschaft mit einem Kraftaufnahmeelement,
Fig. 23a, b einen abnehmbaren Haken mit Kraftaufnahmeelement,
Fig. 24 zwei zusammenhängend gefertigte Kupplungshaken.

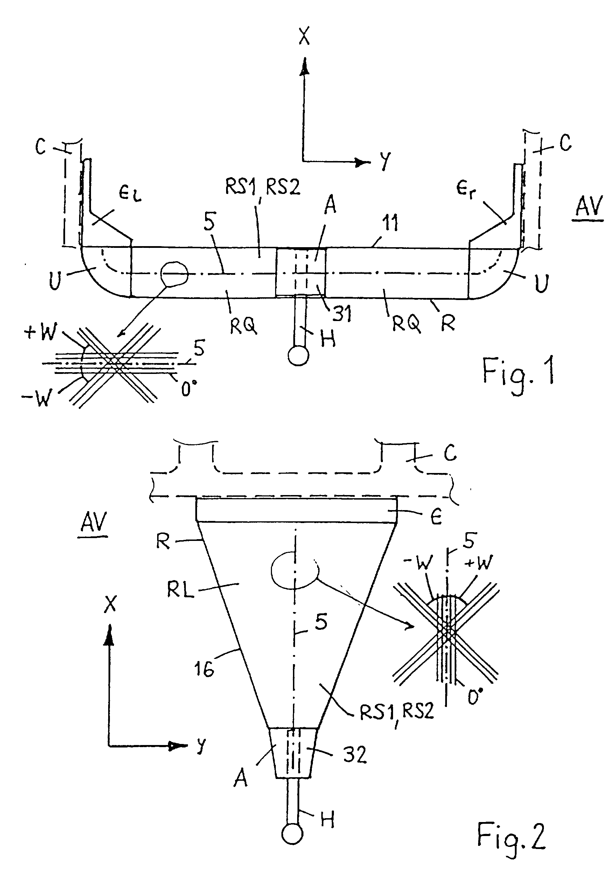

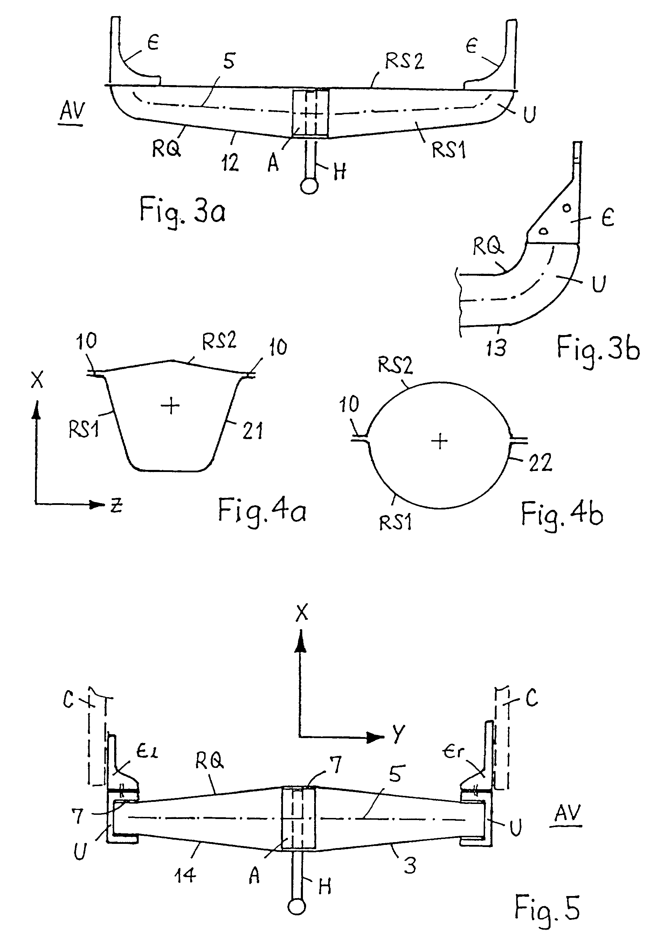

Fig. 1 zeigt eine erfindungsgemässe Anhängevorrichtung AV aus Faserverbundwerkstoff mit einem Kraftübertragungsteil R zwischen einem Kupplungshaken H und einem Fahrzeugchassis C. Die Anhängevorrichtung ist bei ihrer Verwendung am Fahrzeugchassis befestigt. Das Fahrzeugchassis C gehört zu einem Kraftfahrzeug, hält Räder und definiert zusammen mit anderen Teilen des Kraftfahrzeugs und der Anhängevorrichtung eine Fahrrichtung X. Der Kraftübertragungsteil R weist mindestens zwei Teilschalen, nämlich eine Halbschale RS1 und ein damit verbundenes Deckelelement RS2 aus faserverstärktem Kunststoff mit gerichteten Endlosfasern auf (siehe auch Fig. 4a, b), wobei ein Teil der Fasern im wesentlichen längs und ein Teil der Fasern sich kreuzend in einem Winkel ± W zur Kraftübertragungsrichtung 5 des Kraftübertragungsteils ausgerichtet ist. Die Faserwinkel W betragen vorzugsweise meist ca. 45° oder liegen in einem Bereich von ± 30° bis ± 45°. Die Anhängevorrichtung weist weiter ein Kraftaufnahmeelement A am Kraftübertragungsteil R auf, in welchem der Kupplungshaken H befestigbar ist. Der in Fig. 1 ersichtliche Kraftübertragungsteil R ist im Wesentlichen als Querrohr RQ ausgebildet, dessen Kraftübertragungsrichtung 5 im Wesentlichen in Querrichtung Y zur Fahrrichtung X verläuft. Wenn das Kraftfahrzeug in einer Normalstellung mit seinen Rädern auf einer ebenen, horizontalen Auflagefläche steht, ist die Querrichtung Y parallel zu dieser Auflagefläche und horizontal. Das zum Beispiel aus einem Personenkraftwagen bestehende Kraftfahrzeug und die am Fahrzeugchassis befestigte Anhängevorrichtung definieren eine Hochrichtung, die im Folgenden mit Z bezeichnet wird und in der Normalstellung vom Kraftfahrzeug sowie Fahrzeugchassis rechtwinklig zur Auflagefläche und vertikal ist. Das Querrohr RQ hat bei diesem Ausführungsbeispiel im Wesentlichen ungefähr gerade, zur Querrichtung Y parallele Wände und ist in Fig. 1 auch noch mit 11 bezeichnet. Der Kupplungshaken H ist durch das Kraftaufnahmeelement A mit dem Querrohr RQ verbunden. Das Kraftaufnahmeelement ist ungefähr in der Mitte des Querrohrs RQ, 11 angeordnet, befindet sich im Wesentlichen im Hohlraum des Querrohrs und ist in Fig. 1 auch noch mit 31 bezeichnet. Der Hakenschaft des Kupplungshakens H ist durch ein Loch in der Wand des Querrohrs hindurch mit dem Kraftaufnahmeelement A verbunden. Das Querrohr ist bei seinen einander und dem Kraftaufnahmeelement A abgewandten Enden starr mit Umlenkelementen U verbunden, die ihrerseits mit Krafteinleitungselementen E verbunden sind. Die verschiedenen auf den Kupplungshaken H einwirkenden Kräfte werden über das Kraftaufnahmeelement A, 31 auf den Kraftübertragungsteil R bzw. das Querrohr RQ und von diesem über die Umlenkelemente U auf Krafteinleitungselemente E und von diesen auf das Chassis C übertragen. Die beiden Krafteinleitungselemente E sind dem Fahrzeugchassis angepasst und bei der Anhängevorrichtung mit Querrohr RQ als unterschiedliches linkes Krafteinleitungselement El bzw. rechtes Krafteinleitungselement Er ausgebildet. Die Krafteinleitungselemente El, Er können zum Beispiel spiegelsymmetrisch zueinander sein.

Im Beispiel von Fig. 2 ist der Kraftübertragungsteil R als Längsrohr RL ausgebildet, das in Fig. 2 und mit 16 bezeichnet ist und sich zum Beispiel vom Fahrzeugchassis C weg zum Kupplungshaken C hin verjüngt. Die Mittellinie und die Kraftübertragungsrichtung 5 des Längsrohrs sind zum Beispiel mindestens im Grundriss und zum Beispiel überhaupt - d.h. auch in einer Seitenansicht - ungefähr parallel zur Fahrrichtung X. Ein in Fig. 2 mit 32 bezeichnetes Kraftaufnahmeelement A ist starr mit dem hinteren Ende des Längsrohrs verbunden. Am vorderen Ende des Längsrohrs ist mindestens ein Krafteinleitungselement E starr mit dem Längsrohr RL verbunden, wobei wiederum die Kräfte vom Kupplungshaken H über das Kraftaufnahmeelement A, 32 auf das Längsrohr RL, 16 und über das Krafteinleitungselement E in angepasster Form auf das Chassis C eines Fahrzeugs, z.B. eines Personenkraftwagens, übertragen werden. Bei Längsrohrausführungen RL liegt die Kraftübertragungsrichtung 5 im Wesentlichen ungefähr parallel zur Fahrrichtung X , mit entsprechenden Faserorientierungen (0°, ± W).

Die Formgebung der Rohre RQ und RL richtet sich auch nach den räumlichen Randbedingungen an einem Fahrzeug. Das bzw. jedes mit einem Querrohr oder Längsrohr verbundene Krafteinleitungselement wird beispielsweise durch Verschrauben mit dem Chassis verbunden.

Fig. 3a zeigt ein Beispiel einer Anhängevorrichtung AV mit einem Querrohr RQ, welches hier mit 12 bezeichnet ist und auch die Kraftumlenkelemente U einstückig enthält. Die Hauptabschnitte der Mittellinie und der Kraftübertragungsrichtung dieses Querrohrs weist zum Beispiel als Hauptabschnitte zwei ungefähr gerade Schenkel auf, die mit der Fahrrichtung einen etwas von 90° abweichenden Winkel bilden und in der Nähe des Kupplungshakens durch einen Übergangsabschnitt miteinander verbunden sind. In einem besonders einfachen Fall kann das Querrohr 12 beispielsweise eine Querschnittsform 21 gemäss Fig. 4a aufweisen und aus einer topfförmigen Halbschale RS1 und einem durchgehenden flachen Deckelelement RS2 bestehen. Fig. 3b zeigt eine weitere Variante eines integrierten Querrohrs RQ, das hier mit 13 bezeichnet ist und an seinen Enden mit aufgebogenen Umlenkelementen U versehen und/oder verbunden ist. Die Fig. 4b zeigt ein weiteres Beispiel einer stark gerundeten Querschnittsform 22 mit runder Halbschale RS1 und rundem Deckelelement RS2, welche an den Stellen 10 flächig miteinander verbunden sind, wie dies auch in Fig. 4a dargestellt ist.

Fig. 5 zeigt ein weiteres Beispiel einer Anhängevorrichtung AV mit einem hier mit 14 bezeichneten Querrohr RQ. Diese Anhängevorrichtung ist aus separaten Modulen zusammengesetzt, wobei das Kraftaufnahmeelement A, das Querrohr RQ, die Umlenkelemente U und die Krafteinleitungselemente Er und El die Module bilden. Im Beispiel der Anhängevorrichtung von Fig. 2 mit einem Längsrohr 16 bilden das Kraftaufnahmeelement A, das Längsrohr RL und das Krafteinleitungselement E analoge Module.

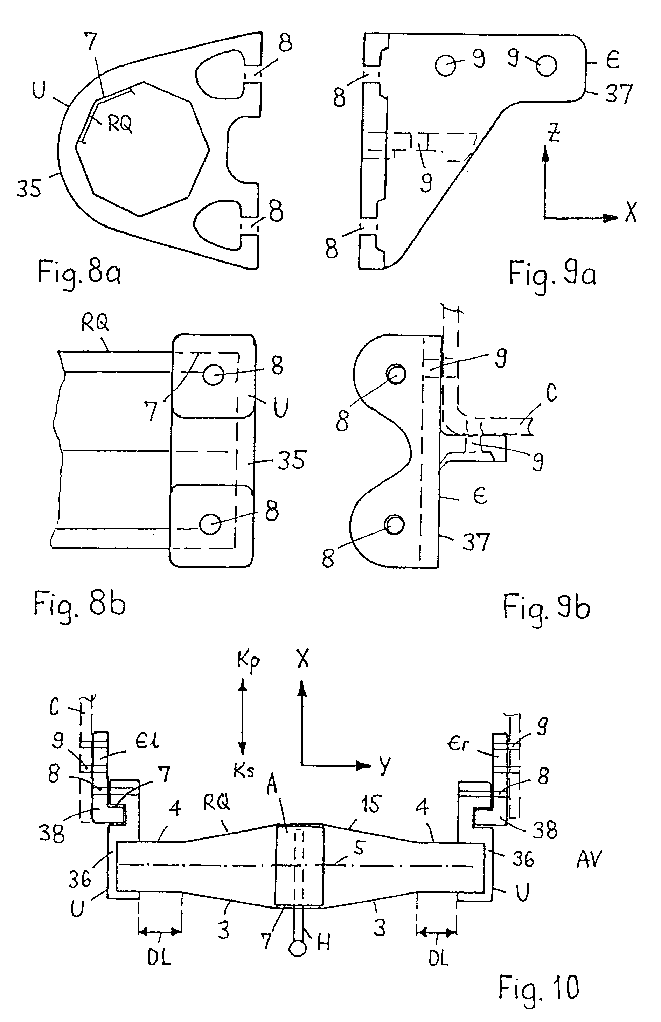

Besonders vorteilhaft ist, wenn zwischen den Modulen A, R, U und gegebenenfalls auch E formschlüssige Verbindungen 7, die im folgenden noch näher illustriert werden, ausgebildet sind. In den Beispielen von Fig. 5, 6, 7, 8 sind dabei die Verbindungen A-RQ-U auch verdrehsicher ausgebildet (zur Übertragung von Torsionskräften). Im Falle des Beispiels von Fig. 10 wird eine formschlüssige Verbindung 36 und 38 zwischen den Modulen U und E dargestellt, welche insbesondere die Zug- und Druckkräfte Ks, Kp aufnimmt.

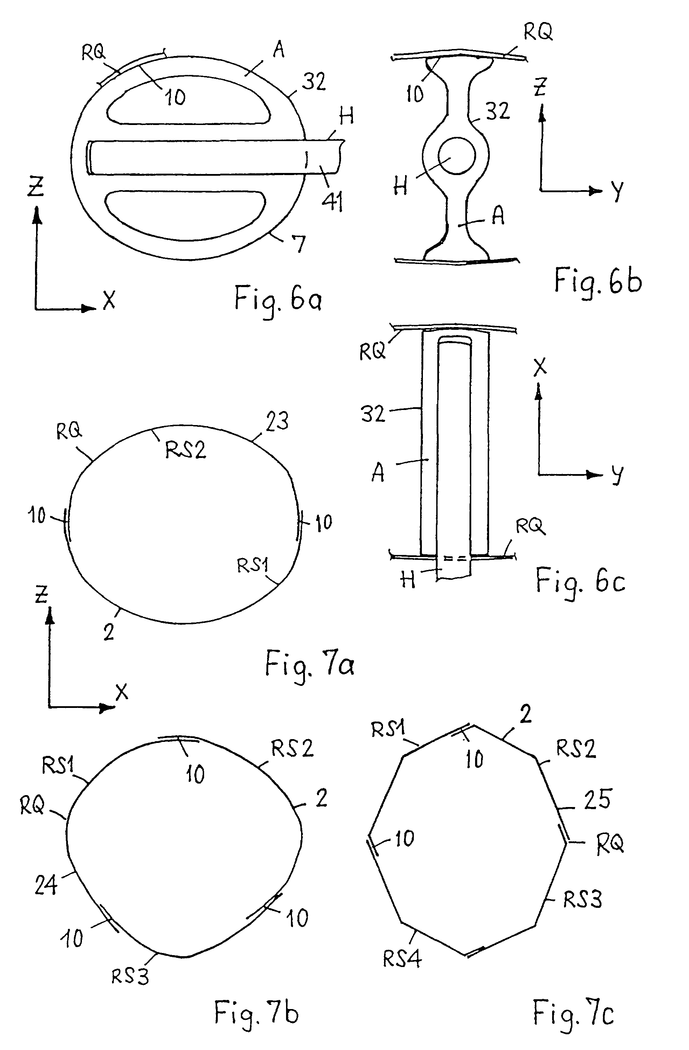

Die Fig. 6a, b, c illustrieren in drei Ansichten eines mit 32 bezeichneten Kraftaufnahmeelements A, welches eine abgeflacht runde, d.h. elliptische Form und damit eine formschlüssige, verdrehsichere Verbindung 7 zum umgebenden Querrohr RQ aufweist. Die Formgebung dieses Kraftaufnahmeelements 32 illustriert auch mindestens eine flächige Verbindung 10, so dass die Kräfte möglichst grossflächig vom Kupplungshaken H auf das Kraftaufnahmeelement A und von diesem wiederum grossflächig auf das Querrohr RQ übertragen werden können.

Die Fig. 7a, b, c zeigen weitere Beispiele von Querschnittsformen von Querrohren mit relativ grosser Querschnittsfläche und geringen Wandstärken. Diese Querrohre haben verhältnismässig hohe Torsionssteifigkeiten und erlauben Übertragungen von grossen Momenten. Die Querrohre bestehen aus mindestens zwei Teilschalen RS1 und RS2, welche vorzugsweise flächig miteinander verbunden sind. Diese flächige Verbindung 10 - analog zur flächigen Verbindung 10 an Aussenflanschen in den Fig. 4a und b - sind hier aus sich flächig überlappenden Teilschalen ausgeführt. In Fig. 7a weist das Querrohr 23 zwei leicht elliptische Teilschalen RS1 und RS2 auf. Das Beispiel von Fig. 7b zeigt ein Querrohr 24 mit drei Teilschalen RS1, RS2 und RS3, welche z.B. leicht winkelförmig bzw. dreieckförmig abgeflacht sind. Das Querrohr 25 nach Fig. 7c weist vier Teilschalen RS1 - RS4 auf, welche identisch geformt sein können und welche hier im wesentlichen ein abgerundetes Achteck bilden. Um bei diesen relativ grossvolumigen Querrohren hohe Beulfestigkeiten zu erreichen, weisen die Rohre vorzugsweise gewölbte Bereiche 2 bzw. mehrfach abgebogene Rohrformen auf. Vorteilhaft zur Übertragung der auftretenden Kräfte ist auch ein sich im Querschnitt verjüngender, konischer oder pyramidenförmiger Abschnitt 3 des Querrohrs RQ, wie es in den Fig. 5 und 10 dargestellt ist. Das Querrohr 11 von Fig. 1 weist dagegen über seine ganze Länge einen konstanten Querschnitt auf.

Die Fig. 8a und b zeigen in zwei Ansichten ein Beispiel eines hier mit 35 bezeichneten Kraftumlenkelements bzw. -moduls U und dazu passend die Fig. 9a und b ein Beispiel eines hier mit 37 bezeichneten Krafteinleitungselements E ebenfalls in zwei Ansichten. Das Querrohr RQ wird in den Kraftumlenkungsteil U durch eine formschlüssige und flächige Verbindung 7 eingefügt und z.B. durch thermoplastisches Verschweissen oder bei Duromeren durch Verklebung befestigt.

Torsionskräfte wie auch Zug- und Druckkräfte, welche auf die Anhängevorrichtung bzw. das Querrohr wirken, werden hier vom Umlenkelement U mittels zweier Schraubverbindungen 8 auf das Krafteinleitungselement E übertragen. Diese Schraubverbindungen der faserverstärkten Kunststoffteile U und E werden grossflächig z.B. mittels Inserts und Unterlagsscheiben ausgeführt. Vom Krafteinleitungselement E erfolgt die Kraftübertragung wiederum beispielsweise durch eine Schraubverbindung 9 auf das Chassis.

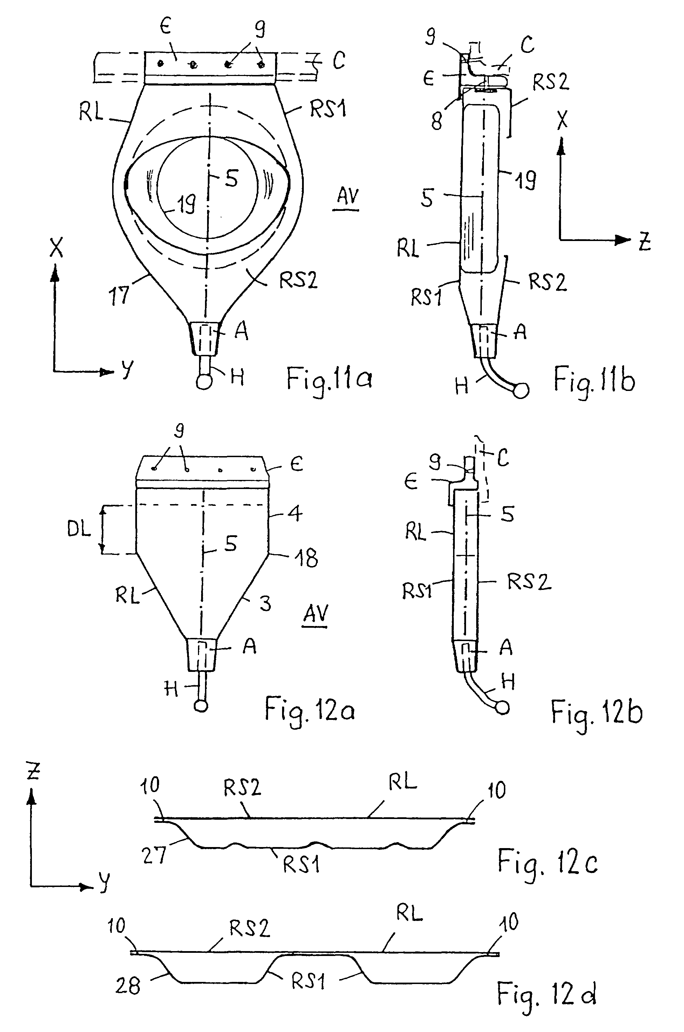

Fig. 10 zeigt ein weiteres Beispiel einer Anhängevorrichtung mit Querrohr 15, welches einen ablängbaren Bereich 4 mit konstantem Querschnitt aufweist. Analog dazu weist auch der als Längsrohr RL ausgebildete Kraftübertragungsteil R von Fig. 12 einen ablängbaren Bereich 4 mit konstantem Querschnitt auf. Damit können Querrohre nach Fig. 10 bzw. Längsrohre nach Fig. 12 in einer Form hergestellt werden, und daraus, je nach Bedarf, Aufhängevorrichtungen AV unterschiedlicher Länge durch entsprechendes Ablängen im Bereich 4 zusammengestellt werden. Durch Ablängen können die in den Figuren 10 und 12a eingetragenen Längen DL verändert werden. So können auf einfache Weise mit identischen, ursprünglich separaten Modulen A, RQ bzw. RL und U Anhängevorrichtungen für verschiedene Chassis mit unterschiedlichen räumlichen Randbedingungen (mit entsprechend angepassten Krafteinleitungselementen E) hergestellt werden und damit eine rationellere Serienherstellung mit grossen Stückzahlen für ein breites Sortiment von unterschiedlichen Fahrzeugen erreicht werden. Das Kraftumlenkungselement 36 und die Krafteinleitungselemente 38 bilden hier auch eine formschlüssige Verbindung 7.

Die Fig. 11a, b zeigen in zwei Ansichten ein Beispiel einer Anhängevorrichtung mit einem Längsrohr 17, welches als untere Teilschale. eine Halbschale RS1 und als obere Teilschale ein mindestens teilweise geschlossenes Deckelelement RS2 aufweist. In diesem Beispiel ist die untere Teilschale so gross dimensioniert, dass ein Reserverad 19 in der unteren Teilschale verstaut werden kann. Das die obere Teilschale bildende Deckelelement RS2 weist eine gerundete Öffnung auf, durch welche das Reserverad in diesen Stauraum einschiebbar ist. Dies ergibt eine besonders günstige Raumnutzung.

Im Beispiel von Fig. 12a, b, c ist eine Anhängevorrichtung mit einem Längsrohr 18 dargestellt, das als flacher Kasten 27 ausgebildet ist, um so relativ wenig Bauhöhe zu beanspruchen. In einer weiteren Variante nach Fig. 12d kann die Querschnittsform durch entsprechende Ausbildung der Schale RS1 auch zwei nebeneinander verlaufende, zusammenhängende Rohre 28 bilden.

Als geeignetes Material für die erfindungsgemässe Vorrichtung kann eine thermoplastische Matrix z.B. aus Polyamid (PA), Polyethylenterephthalat (PET), Polybutylenterephthalat (PBT), Polycarbon (PC) eingesetzt sein, wobei die Verbindung der verschiedenen Elemente untereinander, d.h. der Teilschalen RS1 - RS4 der Quer- oder Längsrohre, sowie die Verbindungen zwischen den allfälligen, ursprünglich separaten Modulen A, R, U dann mit Vorteil durch thermoplastisches Verschweissen erfolgt. Die Verbindungen 10 sind relativ grossflächig ausgeführt und betragen ein Mehrfaches der Wandstärken.

Für kleinere Serien von Anhängevorrichtungen kann mit Vorteil auch eine duromere Matrix (z.B. Epoxy) eingesetzt werden, wobei dann die Teilschalen und auch die Module und Elemente untereinander vorzugsweise durch Verklebung miteinander verbunden sind.

Als Verstärkung der Matrix werden vor allem Glasfasern eingesetzt. Für besonders hohe Steifigkeitssanforderungen und für besonders leichte Ausführungen werden auch Kohlefasern eingesetzt.

Die Kraftübertragungsteile Querrohr RQ und Längsrohr RL weisen mindestens ein Endlosfasergewebe und/oder -gelege mit einem Faseranteil von mindestens 40 Vol.-%, vorzugsweise 50 - 55 Vol.-%, auf, was die notwendigen Festigkeiten und Steifigkeiten in Kombination mit den relativ grossen Querschnitten ergibt. Die Wandstärken betragen z.B. 1,5 mm - 2 mm für Glasund 1 mm - 1,5 mm für Kohlefaserverstärkung. Die Teilschalen können aus mehreren Schichten unterschiedlicher Faserorientierung und auch aus Multiaxialgelegen aufgebaut sein. Ein solcher Schichtaufbau kann z.B. bestehen aus symmetrisch angeordneten 0°, ± 45°, 0°, ± 45°, 0° Lagen.

Die Module Kraftaufnahmeelement A, Kraftumlenkelemente U sowie Krafteinleitungselemente E weisen vorzugsweise eine Kurz- oder Langfaserverstärkung mit einem Faseranteil von ca. 20 - 35 Vol.-% auf. Die Wandstärken betragen der örtlichen Belastung entsprechend 4 mm - 8 mm.

Vorteilhafte Herstellverfahren für die Kraftübertragungsteile Querrohr RQ und Längsrohr RL sind Stempelumformverfahren von thermoplastischen Faserverbundstoffen. Für Duromere-Verbundstoffe eignen sich beispielsweise RTM-Verfahren ("Resin-Transfer-Moulding"-Verfahren). Die Module A, U und E können vorzugsweise durch thermoplastisches Fliesspressen oder Spritzen hergestellt werden. Für faserverstärkte Duromere eignen sich beispielsweise SMC-Verfahren ("Sheet-Mould-Compound"-Verfahren).

An den Kupplungshaken H der Anhängevorrichtung AV werden sehr hohe und komplexe mechanische Anforderungen gestellt mit verschiedenen Belastungen durch Zug-, Druck-, Schub- und Torsionskräfte, welche zudem in engen räumlichen Randbedingungen zu erfüllen sind. Daraus folgen hohe Festigkeits- und Steifigkeitsanforderungen. Gesucht ist auch hier ein wesentlich leichterer Haken als die bisher bekannten Stahlhaken.

Diese Anforderungen erfüllt ein Kupplungshaken H aus Faserverbundwerkstoffen. Der erfindungsgemässe Haken weist eine Kohlefaserverstärkung aus Endlosfasern mit einem Faseranteil von mindestens 45 Vol.-%, vorzugsweise mindestens 50 Vol.-% und eine den auftretenden Kräften entsprechende Faserorientierung und Bauteilgeometrie auf.

Damit können die erforderlichen hohen Längs- und Torsionssteifigkeiten erreicht werden. Zudem werden vorteilhafte Ausführungen und relativ kostengünstige serienmässige Herstellverfahren angegeben.

Die auftretenden Lasten an der Kupplungskugel induzieren im Hakenschaft hohe Zug-, Druck- und Torsionskräfte und Momente. Diese werden mit entsprechender Anordnung und Orientierung der C-Fasern übertragen wie in den Figurenbeispielen ausgeführt ist.

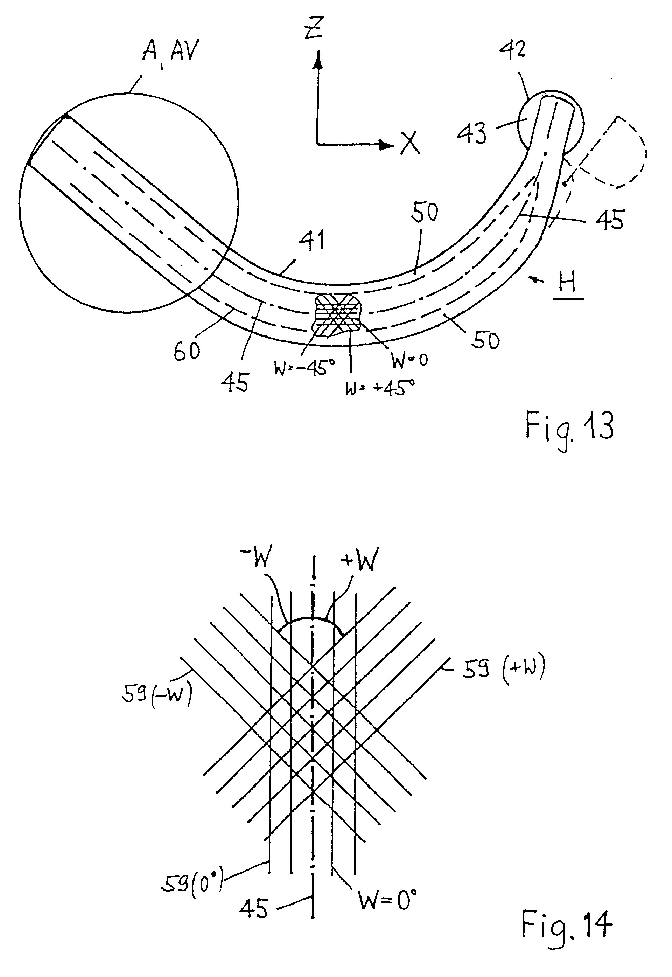

Zug- und Druckkräfte Ks, Kp werden hauptsächlich durch längs zur Mittellinie 45 (siehe Fig. 13) orientierte Fasern, Momente durch Faserpaar-Anordnungen mit genügend grossem Abstand und Torsionskräfte durch gekreuzte Fasern im Umfangsbereich, d.h. mit Abstand zur Mittellinie des Hakenschafts, aufgenommen bzw. übertragen.

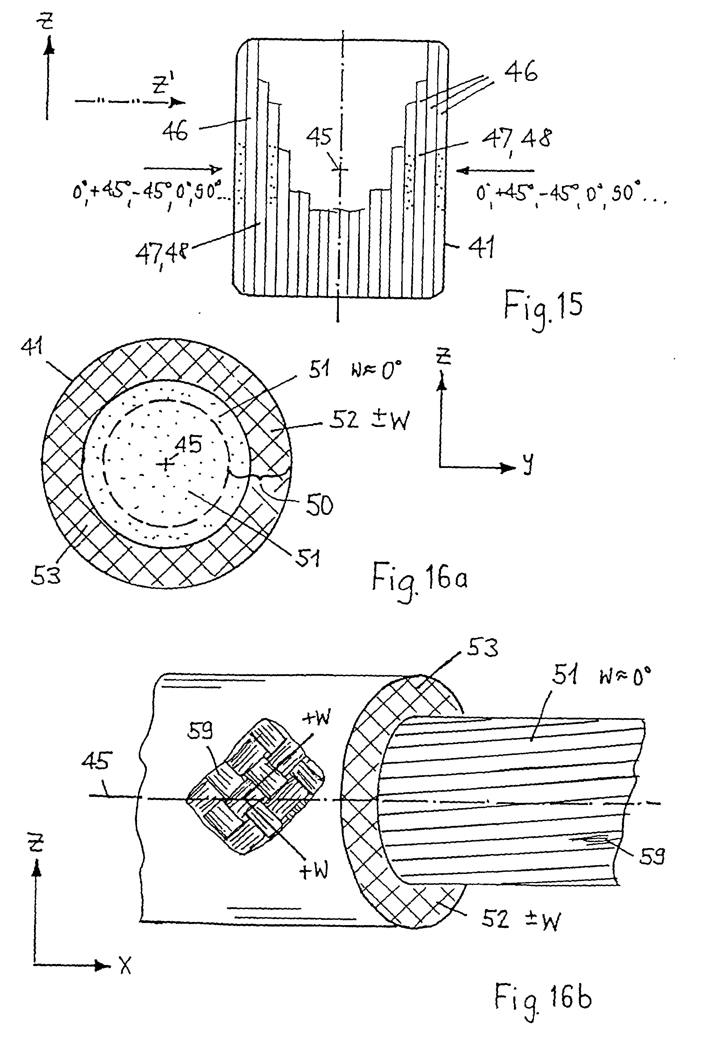

Kompakte Vollprofile, z.B. Vollkörper aus Carbon-Faser-Kunststoff (CFK) nach Beispielen der Fig. 15 und 16 mit annähernd kreisförmigem oder quadratischem Querschnitt sind relativ einfach und kostengünstig herstellbar. Der Materialaufwand ist jedoch noch nicht minimal, da zur Torsions- und Biegesteifigkeit hauptsächlich der Aussenbereich beiträgt. Bei der Variante mit einer Schichtung unterschiedlich orientierter Lagen mit nur zweidimensionaler Faserorientierung (nach Fig. 15) wird die notwendige Torsionssteifigkeit durch interlaminare Scherfestigkeit übertragene bzw. erzielt.

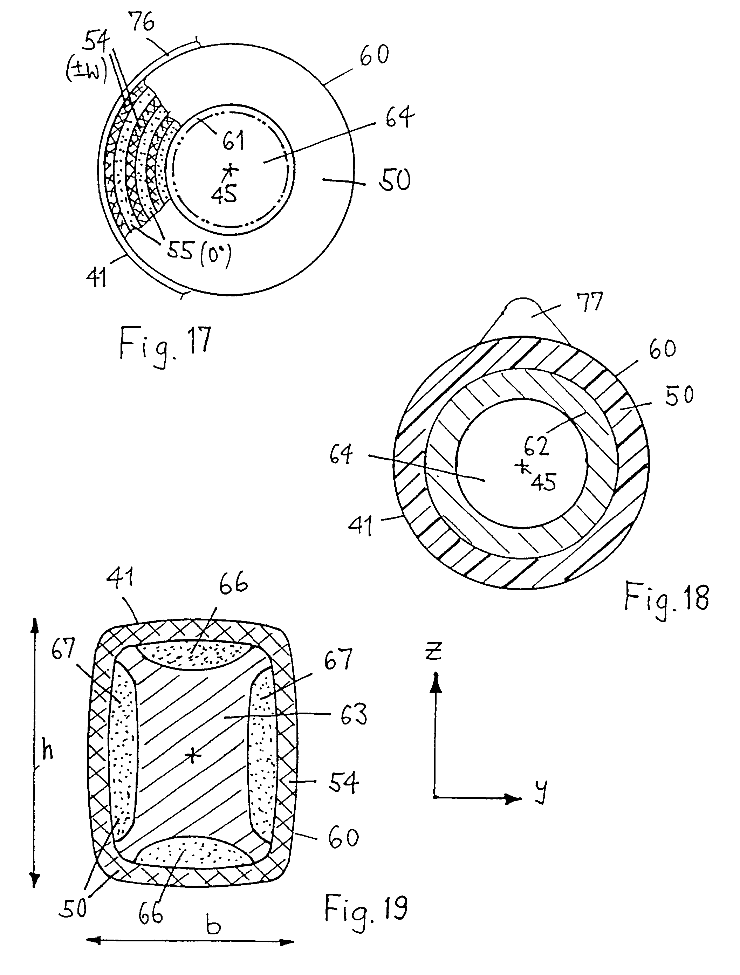

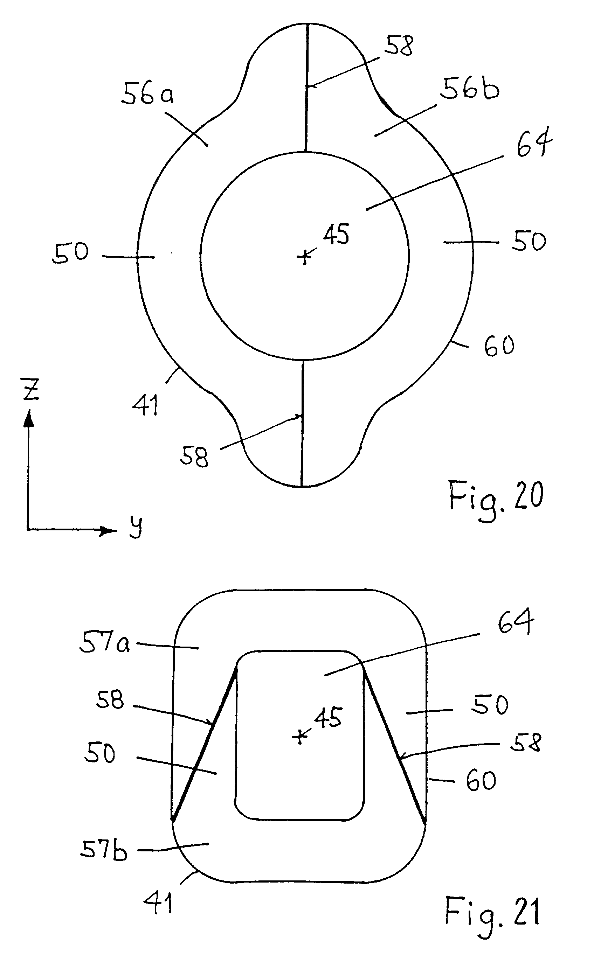

Rohrförmige Ausführungen bzw. Hohlkörper bilden eine besonders vorteilhafte Lösungsvariante, mit einer möglichst optimalen werkstoffgerechten Konstruktion, bei der der relativ teure Carbon-Faser-Kunststoff (CFK) vollständig im lastentragenden Aussenbereich eingesetzt ist. Mögliche Ausführungsvarianten zeigen die Fig. 17 bis 21 mit einem inneren Hohlraum (Fig. 17), welche z.B. durch Fügen von zwei Halbschalen (Fig. 20, 21) oder durch Schlauchblastechnik herstellbar sind oder Varianten mit inneren Stützrohren (Fig. 17, 18) oder mit einem kompakten, leichten Stützkörper (nach Fig. 19). Dies ergibt eine besonders gute Materialausnützung mit minimalem Gewicht.

Ein Gewichtsvergleich illustriert den sehr grossen Fortschritt: Anstelle eines bisherigen Stahlhakens von beispielsweise 3 kg Masse bzw. Gewicht kann mit dem erfindungsgemässen aus Carbon-Faser-Kunststoff (CFK) Haken ein massiv reduziertes Gewicht von nur 1 kg erreicht werden. Ein solcher Haken mit minimalem Gewicht passt natürlich auch besonders gut zu einer zugeordneten Anhängevorrichtung AV aus Faserverbundwerkstoffen nach Fig. 1 bis 12.

Überdies kann mit solchen CFK Haken mit nur sehr wenigen Formvarianten ein grosses Sortiment von möglichen Anhängevorrichtungen für alle Arten von Fahrzeugen abgedeckt werden, was relativ grosse Stückzahlen und damit wiederum entsprechende Kostenvorteile ermöglicht. Diese erfindungsgemässen Kupplungshaken werden an den Beispielen der Fig. 13 bis 24 weiter ausgeführt.

Fig. 13 zeigt einen Kupplungshaken H einer Anhängevorrichtung mit einem Hakenschaft 41 und einer Kupplungskugel 42, z.B. einer Hohlkugel 43, welcher in einem Kraftaufnahmeelement A einer Anhängevorrichtung AV fixiert ist. Der Hakenschaft weist mindestens einen lasttragenden Aussenbereich 50 aus mit Endlos-Kohlefasern verstärktem Kunststoff auf, mit einem Faseranteil von mindestens 45 Vol.-%, vorzugsweise sogar 50 - 55 Vol.-%, in einer Polymermatrix. Ein Teil der Fasern ist im wesentlichen längs zur Mittellinie 45 des Hakenschäfts und ein Teil der Fasern sich kreuzend in einem Winkel ± W zur Mittellinie orientiert. Diese Anordnung der Fasern oder Faserstränge 59 ist in Fig. 14 illustriert, wobei der Winkel W der sich kreuzenden Fasern vorzugsweise in einem Bereich von ± 30° bis ± 45° liegt. Fig. 13 zeigt auch ein Beispiel eines rohrförmigen, gebogenen Hakenschafts 60, wie dies zu den Fig. 17 und 18 weiter erläutert wird.

Als Polymermatrix für Kupplungshaken eignen sich Duroplaste (z.B. Epoxy) und vor allem für grössere Serien Thermoplaste (wie z.B. PA, PET, PC, PBT).

Die Beispiele in den Figuren 15 und 16 zeigen kompakte Vollprofile, wobei im Beispiel von Fig. 15 der Hakenschaft 41 Lagen 46 mit unidirektionalen (UD) Fasern aufweist, die mit unterschiedlichen Faserorientierungen abwechselnd aufeinander geschichtet sind, und wobei die Faserorientierungen symmetrisch zur Mittellinie 45 angeordnet sind. Diese Lagen 46 können aus uni-direktionalen (UD) Prepreg-Schichten 47 (vorher hergestellten Halbfabrikat-Schichten) oder auch aus multiaxialen Faser-Gelegen 48 bestehen. Die Faserorientierungen sind beispielsweise angegeben mit 0°, +45°, -45°, 0°, 90° usw. Die Anzahl und Abfolge der Lagen mit unterschiedlichen Faserorientierungen ist dabei so ausgelegt, dass einerseits die Zug- und Druckkräfte und Momente vorwiegend mit 0°-Fasern getragen werden, während die Torsions- und Schubkräfte durch gekreuzte Fasern, z.B. ± 45°, und durch dünne 90°-Fasern aufgenommen werden, wobei die interlaminare Scherfestigkeit die Übertragung von Kräften von Lage zu Lage 46 bewirkt. Die Orientierung der Schichtlagen kann sowohl parallel zur Hochrichtung Z gewählt werden oder auch, als Alternative eingezeichnet, senkrecht zur Hochrichtung Z.

Fig. 16a zeigt im Querschnitt und Fig. 16b teilweise aufgeschnitten einen CFK Hakenschaft mit einem inneren Kern 51, der im wesentlichen längsorientierte Fasern, d.h. mit W ca. 0° und eine Mantelschicht 52 aus sich kreuzenden Fasern mit Winkel ± W bezüglich der Mittellinie 45 aufweist. Beispielsweise kann diese Mantelschicht aus einem Flechtschlauch 53 von CFK Strängen 59 bestehen. Ein lasttragender Aussenbereich 50 umfasst hier die Mantelschicht 52 und auch einen anschliessenden Teil des inneren Kerns 51, womit im wesentlichen Momente und Torsionskräfte abgestützt werden. Der innere Bereich des inneren Kerns überträgt im wesentlichen Zug- und Druckkräfte längs der Mittellinie 45.

Der Aussenbereich 50 bzw. die Mantelschichten können, wie in Fig. 17 dargestellt, auch als Umfangsschichten 54, 55 mit abwechselnd sich kreuzenden Lagen gebildet sein. Dabei kann eine Lage z.B. im Winkel + W gewickelt werden und darauf liegend eine komplementäre Lage im Winkel - W. Dazwischen sind in diesem Beispiel Schichten 55 mit parallelen uni-direktionalen Fasern, d.h. im wesentlichen mit dem Winkel W = 0° angeordnet.

Fig. 17 zeigt im Querschnitt einen rohrförmigen Hakenschaft 60 mit einem inneren Hohlraum 64. In Fig. 17 ist als alternative Variante auch ein dünnes Innenrohr 61 dargestellt, welches die Herstellung des lasttragenden Carbon-Faser-Kunststoff-Aussenbereichs 50 erleichtern kann, indem das Innenrohr als Stützkörper dient.

In einer anderen Ausführungsvariante des Hakenschafts 41 nach Fig. 18 kann auch ein relativ starkes Innenrohr 62 vorgesehen sein, welches sowohl als Stützkörper wie auch selber lasttragend ausgebildet ist, z.B. in Form eines Stahlrohrs, welches ergänzend einen Teil der Lasten und Kräfte aufnehmen kann.

Fig. 19 zeigt eine weitere vorteilhafte Ausführungsvariante eines Hakenschafts 41 mit einem kompakten inneren Stützkörper 63 aus einem leichten Füllmaterial z.B. aus Hohlglaskugel-Polymer Material (Microballon) und mit einem Aussenbereich, welcher sowohl in einem oberen und unteren Bereich 66 wie auch links und rechts in seitlichen Bereichen 67 symmetrisch angeordnete uni-direktionale Fasern und eine darüber liegende Umfangsschicht 54 mit sich kreuzenden Fasern aufweist. Die Querschnittsform des Hakenschafts 41 von Fig. 19 ist im wesentlichen ein abgerundetes Rechteck, wobei die Höhe h und die Breite b des Querschnitts entsprechend den aufzunehmenden Lasten dimensioniert werden. Natürlich kann auch eine kreisförmige oder leicht elliptische Querschnittsform analog zu Fig. 17 mit abwechselnden Faserlagen von paralleler und sich kreuzender Orientierung auf einem kompakten inneren Stützkörper 63 realisiert werden. Der Hakenschaft 41 kann zudem auch eine weichere, stossdämpfende äussere Schutzschicht 76 (nach Fig. 17) oder auch eine Stossrippe 77 (nach Fig. 18) aus Polymermatrix Material aufweisen, welches Material unverstärkt oder auch kurzfaserverstärkt sein kann.

Eine weitere vorteilhafte Ausführungsform eines CFK Hakens besteht nach Fig. 20, 21 darin, dass der Aussenbereich 50 aus zwei miteinander verbunden dicken Halbschalen aus kohlefaserverstärktem Kunststoff gebildet wird. In Fig. 20 sind dies die runden Halbschalen 56a, 56b, welche in relativ gross dimensionierten Verbindungsflächen 58 miteinander verbunden, d.h. bei Thermoplasten vorzugsweise miteinander verschweisst und bei Duroplasten miteinander verklebt sind. Die Verbindungsflächen 58 sind so angeordnet, dass relativ geringe Kräfte an den Flächen auftreten.

Fig. 21 zeigt ein ähnliches Beispiel mit zwei unterschiedlichen im wesentlichen einen rechteckförmigen Querschnitt bildenden Halbschalen 57a, 57b, welche wiederum grossflächig über Verbindungsflächen 58 miteinander verbunden sind. Solche Halbschalen können vorteilhaft durch Formpressen hergestellt werden.

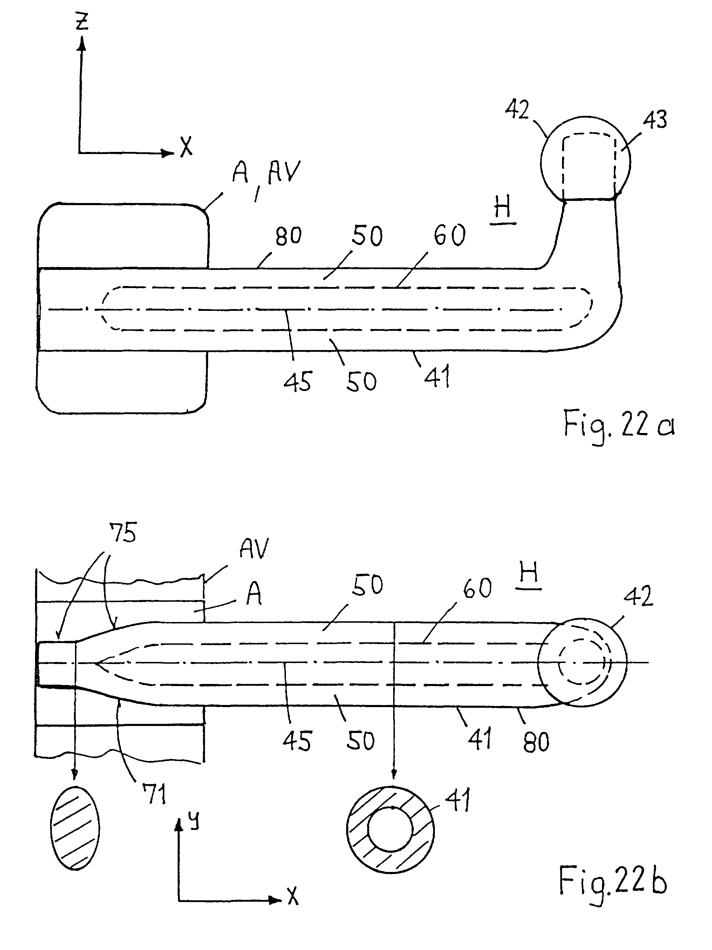

Die Fig. 22a, 22b zeigen in zwei Ansichten ein Beispiel eines Hakens H mit einem geraden, rohrförmigen Teil 80, der besonders einfach herstellbar ist. Mit Vorteil ist der CFK Hakenschaft 41 in eine Hohlkugel 43 aus Stahl eingeschmolzen oder eingeklebt, wie dies in Fig. 22a und in Fig. 13 dargestellt ist. Der Hakenschaft 41 weist hier eine formschlüssige Krafteinleitung 75 zur zugeordneten Anhängevorrichtung AV bzw. zu einem Krafteinleitungselement A auf. Die formschlüssige Krafteinleitung, welche Torsions- und Druckkräfte aufnimmt, ist hier als Abflachung des Schaft-Querschnitts ausgeführt.

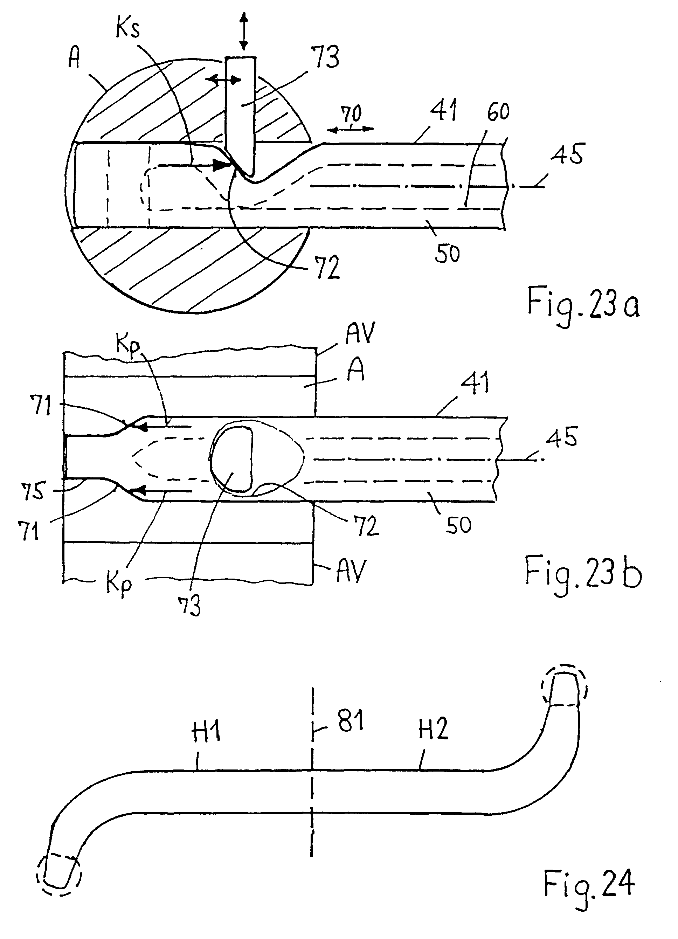

Die Fig. 23a und 23b zeigen in zwei Ansichten einen Kupplungshaken 70, welcher abnehmbar ausgebildet ist mit einer Verjüngung 71 zur Aufnahme von Druckkräften Kp und mit einem Verriegelungselement 73 und einer zugeordneten Einbuchtung 72 zur Aufnahme von Zugkräften Ks, welche über die Einbuchtung 72 im Hakenschaft durch das Verriegelungselement 73 abgestützt werden.

Fig. 24 illustriert ein vorteilhaftes Herstellverfahren, bei welchem mindestens zwei zusammenhängende Kupplungshaken, in diesem Beispiel H1 und H2, hergestellt werden, z.B. durch Wickeln oder auch Pressen, und wobei die einzelnen Kupplungshaken anschliessend längs der Trennebene 81 getrennt werden.

Vorteilhafte Verfahren zur Herstellung eines solchen CFK Kupplungshakens können darin bestehen, dass CFK Stränge 59 mit sich kreuzenden Winkeln ± W auf einen inneren Stützkörper 61, 63 aufgewickelt werden (Beispiele nach Fig. 17 - 19). Als weiteres vorteilhaftes Herstellverfahren kann Formpressen, z.B. für Halbschalen oder auch für kompakte Hakenschäfte eingesetzt werden. Wie die Beispiele illustrieren, können für den Hakenschaftquerschnitt, den Hakenschaft und die Kraftaufnahme A in der Anhangevorrichtung AV unterschiedliche Geometrien je nach Randbedingungen und aufzunehmenden Lasten gewählt werden.

## Patentansprüche

1. Anhängevorrichtung mit einem zum Befestigen an einem Fahrzeugchassis (C) bestimmten Kraftübertragungsteil (R, RQ, RL), um einen Kupplungshaken (H) zu halten, **dadurch gekennzeichnet, dass** der Kraftübertragungsteil (R) mindestens zwei miteinander verbundene Teilschalen (RS1, RS2, RS3, RS4) aufweist und mindestens teilweise aus faserverstärktem Kunststoff besteht.

2. Anhängevorrichtung nach Anspruch 1, **dadurch gekennzeichnet, dass** das Fahrzeugchassis (C) eine Fahrrichtung definiert und dass der Kraftübertragungsteil ein im Allgemeinen ungefähr quer zur Fahrrichtung verlaufendes Querrohr (RQ) oder ein im Allgemeinen ungefähr in der Fahrrichtung verlaufendes Langsrohr (RL) aufweist und/oder im Wesentlichen als Querrohr (RQ) bzw. Längsrohr (RL) ausgebildet ist.

3. Anhängevorrichtung nach Anspruch 1 oder 2, **dadurch gekennzeichnet, dass** der Kraftübertragungsteil (R, RQ, RL) einen ablängbaren Bereich (4) mit konstantem Querschnitt aufweist.

4. Anhängevorrichtung nach einem der Ansprüche 1 bis 3, **dadurch gekennzeichnet, dass** der Kraftübertragungsteil (R) mit einem Kraftaufnahmeelement (A), in welchem der Kupplungshaken (H) befestigbar und/oder befestigt ist und/oder Kraftumlenkungselementen (U) und/oder mindestens einem Krafteinleitungselement (E) zum Verbinden des Kraftübertragungsteils (R, RQ, RL) mit dem Fahrzeugchassis (C) verbunden und/oder versehen ist.

5. Anhängevorrichtung nach Anspruch 4, **dadurch gekennzeichnet, dass** das Kraftaufnahmeelement (A) und/oder die Kraftumlenkungselemente (U) und/oder das bzw. jedes Krafteinleitungselement (E) eine Matrix aus Kunststoff und eine Faserverstärkung mit einem vorzugsweise 20 - 35 Vol.-% betragenden Faseranteil aufweisen, wobei die Faserverstärkung beispielsweise durch Kurz- und/oder Langfasern gebildet ist.

6. Anhängevorrichtung nach einem der Ansprüche 1 bis 5, **dadurch gekennzeichnet, dass** die Teilschalen (RS1, RS2, RS3, RS4) des Kraftübertragungsteils (R, RQ, RL), ein gegebenenfalls vorhandenes Kraftaufnahmeelement (A) und/oder gegebenenfalls vorhandene Kraftumlenkungselemente (U) und/oder mindestens ein gegebenenfalls vorhandenes Krafteinleitungselement (E) eine thermoplastische Matrix aufweisen und miteinander verschweisst sind, wobei die thermoplastische Matrix zum Beispiel Polyamid (PA), Polyethylenterephthalat (PET), Polybutylenterephthalat (PBT) oder Polycarbonat (PC) aufweist.

7. Anhängevorrichtung nach einem der Ansprüche 1 bis 5 **dadurch gekennzeichnet, dass** die Teilschalen (RS1, RS2, RS3, RS4) des Kraftübertragungsteils (R, RQ, RL), ein gegebenenfalls vorhandenes Kraftaufnahmeelement (A) und gegebenenfalls vorhandene Kraftumlenkungselemente (U) und/oder mindestens ein Krafteinleitungselement (E) eine Matrix aus einem duromeren Material, zum Beispiel Epoxy, aufweisen und miteinander verklebt sind.

8. Anhängevorrichtung nach einem der Ansprüche 1 bis 7, **dadurch gekennzeichnet, dass** sie aus mindestens zwei ursprünglich separaten Modulen zusammengesetzt ist und dass eines der Module durch den Kraftübertragungsteil (R, RQ, RL) gebildet ist, wobei die Module vorzugsweise durch verdrehsichere, formschlüssige Verbindungen (7) miteinander verbunden sind, wobei das Fahrzeugchassis (C) zum Beispiel eine Fahrrichtung definiert und zum Beispiel als Module ein im Allgemeinen quer zur Fahrrichtung verlaufendes, mindestens einen Teil des Kraftübertragungsteils (R) bildendes Querrohr (RQ), ein ungefähr in dessen Mitte angeordnetes Kraftaufnahmeelement (A), an den Enden des Querrohrs (RQ) angeordnete Umlenkelemente (U) sowie mit diesen verbundene Krafteinleitungsselemente (Er, El) oder ein im Allgemeinen ungefähr in der Fahrrichtung verlaufendes, mindestens einen Teil des Kraftübertragungsteils (R) bildendes Längsrohr (RL), ein an einem Ende des Längsrohrs (RL) angeordnetes Kraftaufnahmeelement (A) und ein am andern Ende des Längsrohrs (RL) angeordnetes Krafteinleitungselement (E) vorhanden sind.

9. Anhängevorrichtung nach einem der Ansprüche 1 bis 8, **dadurch gekennzeichnet, dass** der Kraftübertragungsteil (R, RQ, RL) ausgerichtete Fasern besitzt, von denen ein Teil im wesentlichen längs und ein anderer Teil sich kreuzend in einem Winkel ± W zu einer vom Kraftübertragungsteil (R, RQ, RL) definierten Kraftübertragungsrichtung (5) ausgerichtet ist, wobei der Winkel W vorzugsweise ± 30° bis ± 45° beträgt, wobei die Fasern beispielsweise durch Endlosfasern gebildet sind.

10. Anhängevorrichtung nach einem der Ansprüche 1 bis 9, **dadurch gekennzeichnet, dass** der Kraftübertragungsteil (R, RQ, RL) mindestens ein Fasergewebe und/oder -gelege aufweist, das zum Beispiel Endlosfasern und zum Beispiel einen Faseranteil von mindestens 40 Vol.-% aufweist.

11. Anhängevorrichtung nach einem der Ansprüche 1 bis 10, **dadurch gekennzeichnet, dass** zur Faserverstärkung Glas- und/oder Kohlefasern vorhanden sind.

12. Anhängevorrichtung nach einem der Ansprüche 1 bis 11, **dadurch gekennzeichnet, dass** sie einen Kupplungshaken (H) mit einem Hakenschaft (41) und einer Kupplungskugel (42) aufweist, dass der Hakenschaft (41) mindestens in einem lasttragenden Aussenbereich (50) aus mit Fasern verstärktem Kunststoff besteht, und dass ein Teil der im Aussenbereich (50) vorhandenen Fasern im wesentlichen längs zur vom Hakenschaft (41) definierten Mittellinie (45) und ein Teil den im Aussenbereich (50) vorhandenen Fasern sich kreuzend und in einem Winkel ± W zur Mittellinie (45) des Hakenschafts (41) orientiert ist.

13. Anhängevorrichtung nach Anspruch 12, **dadurch gekennzeichnet, dass** der von einem Teil der Fasern des Aussenbereichs (50) mit der Mitellinie (45) gebildete Winkel W in einem Bereich von ± 30° bis 45° liegt.

14. Anhängevorrichtung nach einem der Ansprüche 12 oder 13, **dadurch gekennzeichnet, dass** die Fasern des Hakenschafts (41) Kohlefasern, beispielsweise Endlosfasern, sind und dass der Faseranteil des Hakenschafts (41) vorzugsweise mindestens 45 Vol.-% beträgt.

15. Anhängevorrichtung nach einem der Ansprüche 12 bis 14, **dadurch gekennzeichnet, dass** der Hakenschaft (41) einen inneren Kern (51) mit im wesentlichen längsorientierte Fasern und einer Mantelschicht (52) aus sich kreuzenden Fasern aufweist.

16. Kupplungshaken für eine Anhängevorrichtung (AV) nach einem der Ansprüche 1 bis 11, mit einem Hakenschaft (41) und einer Kupplungskuppel (42), wobei der Hakenschaft (41) eine Mittellinie (45) definiert, **dadurch gekennzeichnet, dass** der Hakenschaft (41) einen rohrförmigen, lasttragenden Aussenbereich (50) aufweist, der aus zwei miteinander verbundenen Halbschalen (56, 57) aus kohlenfaserverstärktem Kunststoff gebildet ist, und dass ein Teil der im Aussenbereich (50) vorhandenen Fasern sich kreuzend in Winkeln ± W zur Mittellinie (45) des Hakenschafts (41) angeordnet ist.

## Claims

1. Towing device comprising a force transmission part (R, RQ, RL) intended for fastening to a vehicle chassis (C), for holding a hitch (H), **characterized in that** the force transmission part (R) has at least two part-shells (RS1, RS2, RS3, RS4) connected to one another and at least partly comprises fibre-reinforced plastic.

2. Towing device according to Claim 1, **characterized in that** the vehicle chassis (C) defines a driving direction and that the force transmission part has a transverse pipe (RQ) running in general approximately transversely to the driving direction or a longitudinal pipe (RL) running in general approximately in the driving direction, and/or is substantially in the form of a transverse pipe (RQ) or longitudinal pipe (RL).

3. Towing device according to Claim 1 or 2, **characterized in that** the force transmission part (R, RQ, RL) has a region (4) of constant cross-section which can be cut to length.

4. Towing device according to any of Claims 1 to 3, **characterized in that** the force transmission part (R) is connected to and/or provided with a force absorption member (A) in which the hitch (H) can be fastened and/or is fastened and/or force deflection members (U) and/or at least one force induction member (E) for connecting the force transmission part (R, RQ, RL) to the vehicle chassis (C).

5. Towing device according to Claim 4, **characterized in that** the force absorption member (A) and/or the force deflection members (U) and/or the or each force induction member (E) have a matrix of plastic and a fibre reinforcement comprising a fibre content which is preferably 20 - 35% by volume, the fibre reinforcement being formed, for example, by short and/or long fibres.

6. Towing device according to any of Claims 1 to 5, **characterized in that** the part-shells (RS1, RS2, RS3, RS4) of the force transmission part (R, RQ, RL), an optionally present force absorption member (A) and/or optionally present force deflection members (U) and/or at least one optionally present force induction member (E) have a thermoplastic matrix and are welded to one another, the thermoplastic matrix comprising, for example, polyamide (PA), polyethylene terephthalate (PET), polybutylene terephthalate (PBT) or polycarbonate (PC).

7. Towing device according to any of Claims 1 to 5, **characterized in that** the part-shells (RS1, RS2, RS3, RS4) of the force transmission part (R, RQ, RL), an optionally present force absorption member (A) and optionally present force deflection members (U) and/or at least one force induction member (E) comprise a matrix of a duromer material, for example epoxy, and are adhesively bonded to one another.

8. Towing device according to any of Claims 1 to 7, **characterized in that** it is composed of at least two originally separate modules and that one of the modules is formed by the force transmission part (R, RQ, RL), the modules preferably being connected to one another by nonrotatable, interlocking connections (7), the vehicle chassis (C) defining, for example, a driving direction and, for example, modules which are present being a transverse pipe (RQ) running in general transversely to the driving direction and forming at least one part of the force transmission part (R), a force absorption member (A) arranged approximately in the middle of said transverse pipe, deflection members (U) arranged at the ends of the transverse pipe (RQ), and force induction members (Er, El) connected to said deflection members or a longitudinal pipe (RL) running in general approximately in the driving direction and forming at least one part of the force transmission part (R), a force absorption member (A) arranged at one end of the longitudinal pipe (RL) and a force induction member (E) arranged at the other end of the longitudinal pipe (RL).

9. Towing device according to any of Claims 1 to 8, **characterized in that** the force transmission part (R, RQ, RL) has oriented fibres, a part of which is oriented essentially longitudinally and another part of which is oriented so as to intersect at an angle + W to a force transmission direction (5) defined by the force transmission part (R, RQ, RL), the angle W preferably being ± 30° to ± 45°, and the fibres being formed, for example, by continuous filaments.

10. Towing device according to any of Claims 1 to 9, **characterized in that** the force transmission part (R, RQ, RL) comprises at least one woven fibre fabric and/or fibre laid web which comprises, for example, continuous filaments and has, for example, a fibre content of at least 40% by volume.

11. Towing device according to any of Claims 1 to 10, **characterized in that** glass fibres and/or carbon fibres are present for the fibre reinforcement.

12. Towing device according to any of Claims 1 to 11, **characterized in that** it comprises a hitch (H) with a hitch shaft (41) and a coupling ball (42), that the hitch shaft (41) consists, at least in a load-bearing outer region (50), of fibre-reinforced plastic, that a part of the fibres present in the outer region (50) is oriented substantially along the central line (45) defined by the hitch shaft (41) and a part of the fibres present in the outer region (50) is oriented so as to intersect at an angle ± W to the central line (45) of the hitch shaft (41).

13. Towing device according to Claim 12, **characterized in that** the angle W made by a part of the fibres of the outer region (50) with the central line (45) is in a range from ± 30° to 45°.

14. Towing device according to either of Claims 12 and 13, **characterized in that** the fibres of the hitch shaft (41) are carbon fibres, for example continuous filaments, and that the fibre content of the hitch shaft (41) is preferably at least 45% by volume.

15. Towing device according to any of Claims 12 to 14, **characterized in that** the hitch shaft (41) has an inner core (51) comprising substantially longitudinally oriented fibres and a surrounding layer (52) of intersecting fibres.

16. Hitch for a towing device (AV) according to any of Claims 1 to 11, comprising a hitch shaft (41) and a coupling ball (42), the hitch shaft (41) defining a central line (45), **characterized in that** the hitch shaft (41) has a tubular, load-bearing outer region (50) which is formed from two half-shells (56, 57) of carbon-reinforced plastic which are connected to one another, and that a part of the fibres present in the outer region (50) is arranged so as to intersect at angles ± W to the central line (45) of the hitch shaft (41).

## Revendications

1. Dispositif d'attelage comprenant une pièce de transmission de force (R, RQ, RL) destinée à la fixation sur un châssis de véhicule (C), afin de maintenir un crochet de traction (H), **caractérisé en ce que** la pièce de transmission de force (R) présente au moins deux coques partielles (RS1, RS2, RS3, RS4) reliées l'une à l'autre, et est constituée au moins en partie de matière plastique renforcée par des fibres.

2. Dispositif d'attelage selon la revendication 1, **caractérisé en ce que** le châssis de véhicule (C) définit un sens de marche et **en ce que** la pièce de transmission de force présente un tube transversal (RQ) s'étendant généralement approximativement transversalement au sens de marche, ou un tube longitudinal (RL) s'étendant généralement approximativement dans le sens de marche et/ou est réalisée essentiellement sous la forme d'un tube transversal (RQ) ou d'un tube longitudinal (RL).

3. Dispositif d'attelage selon la revendication 1 ou 2, **caractérisé en ce que** la pièce de transmission de force (R, RQ, RL) présente une zone (4) pouvant être coupée à longueur et présentant une section transversale constante.

4. Dispositif d'attelage selon l'une des revendications 1 à 3, **caractérisé en ce que** la pièce de transmission de force (R) est reliée à et/ou est munie d'un élément d'absorption de force (A), dans lequel le crochet de traction (H) peut être fixé et/ou est fixé, et/ou des éléments de déviation de force (U) et/ou au moins un élément d'introduction de force (E) pour relier la pièce de transmission de force (R, RQ, RL) au châssis de véhicule (C).

5. Dispositif d'attelage selon la revendication 4, **caractérisé en ce que** l'élément d'absorption de force (A) et/ou les éléments de déviation de force (U) et/ou le ou chaque élément d'introduction de force (E) présentent une matrice en matière plastique et un renforcement par des fibres comprenant une part de fibres de préférence entre 20 et 35% en volume, le renforcement par des fibres étant formé par exemple par des fibres courtes et/ou longues.

6. Dispositif d'attelage selon l'une des revendications 1 à 5, **caractérisé en ce que** les coques partielles (RS1, RS2, RS3, RS4) de la pièce de transmission de force (R, RQ, RL), un élément d'absorption de force (A) éventuellement présent et/ou des éléments de déviation de force (U) éventuellement présents et/ou au moins un élément d'introduction de force (E) éventuellement présent présentent une matrice thermoplastique, et sont soudés les uns aux autres, la matrice thermoplastique présentant par exemple du polyamide (PA), du polyéthylènetéréphtalate (PET), du polybutylènetéréphtalate (PBT) ou du polycarbonate (PC).

7. Dispositif d'attelage selon l'une des revendications 1 à 5, **caractérisé en ce que** les coques partielles (RS1, RS2, RS3, RS4) de la pièce de transmission de force (R, RQ, RL)), un élément d'absorption de force (A) éventuellement présent et des éléments de déviation de force (U) éventuellement présents et/ou au moins un élément d'introduction de force (E) présentent une matrice en un matériau duromère, par exemple de l'époxy, et sont collés les uns aux autres.

8. Dispositif d'attelage selon l'une des revendications 1 à 7, **caractérisé en ce qu'**il est composé d'au moins deux modules initialement séparés, et **en ce qu'**un des modules est formé par la pièce de transmission de force (R, RQ, RL), les modules étant reliés l'un à l'autre de préférence par des assemblages (7) à engagement positif, résistants à la torsion, le châssis de véhicule (C) définisant par exemple un sens de marche, et un tube transversal (RQ), s'étendant généralement transversalement au sens de marche, formant au moins une partie de la pièce de transmission de force (R), un élément d'absorption de force (A) disposé approximativement au centre dudit tube, des éléments de déviation (U) disposés sur les extrémités du tube transversal (RQ) ainsi que des éléments d'introduction de force (Er, El) reliés à ceux-ci, ou un tube longitudinal (RL), s'étendant généralement approximativement dans le sens de marche, formant au moins une partie de la pièce de transmission de force (R), un élément d'absorption de force (A) disposé sur une extrémité du tube longitudinal (RL) et un élément d'introduction de force (E) disposé sur l'autre extrémité du tube longitudinal (RL) sont présents par exemple sous forme de modules.

9. Dispositif d'attelage selon l'une des revendications 1 à 8, **caractérisé en ce que** la pièce de transmission de force (R, RQ, RL) possède des fibres orientées, parmi lesquelles une partie est orientée essentiellement longitudinalement et une autre partie est orientée de manière concourante selon un angle ± w par rapport à une direction de transmission de force (5) définie par la pièce de transmission de force (R, RQ, RL), l'angle W mesurant de préférence entre ±30° et ±45°, les fibres étant formées par exemple par des filaments.

10. Dispositif d'attelage selon l'une des revendications 1 à 9, **caractérisé en ce que** la pièce de transmission de force (R, RQ, RL) présente au moins un tissu et/ou un assemblage en fibres, qui présente par exemple des filaments et par exemple une part de fibres d'au moins 40% en volume.

11. Dispositif d'attelage selon l'une des revendications 1 à 10, **caractérisé en ce que** des fibres de verre et/ou de carbone sont présentes pour le renforcement par fibres.

12. Dispositif d'attelage selon l'une des revendications 1 à 11, **caractérisé en ce qu'**il présente un crochet de traction (H) comprenant une tige de crochet (41) et une boule d'accouplement (42), **en ce que** la tige de crochet (41) se compose au moins dans une zone extérieure (50) portant la charge d'une matière plastique renforcée par des fibres, et **en ce qu'**une partie des fibres présentes dans la zone extérieure (50) est orientée essentiellement longitudinalement par rapport à la ligne médiane (45) définie par la tige de crochet (41), et une partie des fibres présentes dans la zone extérieure (50) est orientée de manière concourante et ce dans un angle ± W par rapport à la ligne médiane (45) de la tige de crochet (41).

13. Dispositif d'attelage selon la revendication 12, **caractérisé en ce que** l'angle W, formé par une partie des fibres de la zone extérieure (50) avec la ligne médiane (45), se situe dans une zone comprise entre ±30° et 45°.

14. Dispositif d'attelage selon l'une des revendications 12 ou 13, **caractérisé en ce que** les fibres de la tige de crochet (41) sont des fibres de carbone, par exemple des filaments, et **en ce que** la part de fibre de la tige de crochet (41) est de préférence d'au moins 45% en volume.

15. Dispositif d'attelage selon l'une des revendications 12 à 14, **caractérisé en ce que** la tige de crochet (41) présente un noyau (51) interne comprenant des fibres orientées essentiellement longitudinalement et une couche de revêtement (52) en fibres concourantes.

16. Crochet de traction pour dispositif d'attelage (AV) selon l'une des revendications 1 à 11, comprenant une tige de crochet (41) et une boule d'accoupplement (42), la tige de crochet (41) définisant une ligne médiane (45), **caractérisé en ce que** la tige de crochet (41) présente une zone extérieure (50) tubulaire portant la charge, qui est formée à partir de deux demi-coques (56, 57) en matière plastique renforcée par des fibres de carbone et reliées l'une à l'autre, et **en ce qu'**une partie des fibres présentes dans la zone extérieure (50) est disposée de façon concourante dans des angles ± W par rapport à la ligne médiane (45) de la tige de crochet (41).
